# EUROPÄISCHE PATENTSCHRIFT

(11) **EP 2 636 480 B1**
(45) Veröffentlichungstag und Bekanntmachung des Hinweises auf die Patenterteilung: **08.10.2014**
(21) Anmeldenummer: 13158129.0
(22) Anmeldetag: 07.03.2013
(51) Int. Cl.: B23Q 17/24, B23Q 15/22, B23Q 3/155

(54) **Verfahren zum Manipulieren einer Bearbeitungsmaschine**
Method for manipulating a processing machine
Procédé destiné à la manipulation d'une machine de traitement

(30) Priorität: 09.03.2012 DE 102012203752
(43) Veröffentlichungstag der Anmeldung: 11.09.2013
(73) Patentinhaber: Homag Holzbearbeitungssysteme GmbH, 72296 Schopfloch (DE)
(72) Erfinder: Hils, Winfried, 72250 Freudenstadt (DE); Pfeiffer, Marcel, 97078 Würzburg (DE)
(74) Vertreter: HOFFMANN EITLE

(56) Entgegenhaltungen:
- EP-A2- 2 181 791
- WO-A1-2006/027577
- DE-A1-102008 035 305

## Beschreibung

### TECHNISCHES GEBIET

Die vorliegende Erfindung betrifft ein Verfahren zum Manipulieren einer Bearbeitungsmaschine, insbesondere zum Bearbeiten von Werkstücken, die bevorzugt zumindest abschnittsweise aus Holz, Holzwerkstoffen, Kunststoff oder dergleichen bestehen. Ferner betrifft die Erfindung die Verwendung eines tragbaren Computers, einen Computer, ein Computerprogramm und eine Bearbeitungsmaschine, die für ein solches Verfahren ausgestaltet sind.

### STAND DER TECHNIK

Bearbeitungsmaschinen zum Bearbeitung von Holzwerkstücken umfassen üblicherweise eine Vielzahl von Aggregaten, die jeweils für bestimmte Maschinenfunktionen in die Maschine eingebaut sind und individuell auf das von der Bearbeitungsmaschine durchzuführende Bearbeitungsverfahren eingestellt werden müssen. Insbesondere müssen die Aggregate im Hinblick auf die Abmessungen der zu bearbeitenden Werkstücke eingestellt werden. Neben vordefinierten Voreinstellungen der einzelnen Aggregate für einen vordefinierten Gesamtablauf eines Bearbeitungsverfahrens, die aufeinander abgestimmt sind, ist es bisweilen nötig, einzelne Aggregate individuell zu verstellen, um ein möglicherweise nicht optimales Arbeitsergebnis zu verbessern und individuell auf die einzelnen Aggregate Einfluss nehmen zu können.

Bei einer solchen individuellen Einstellung einzelner Aggregate einer Bearbeitungsmaschine kommt bisher eine sogenannte Einrichthilfe zum Einsatz, mit der Aggregate grundsätzlich individuell eingestellt werden können. Voraussetzung für eine korrekte Einstellung der einzelnen Aggregate ist jedoch, dass mit der Einrichthilfe das richtige Aggregat ausgewählt und dann eingestellt wird. Da herkömmliche Einrichthilfen jedoch verhältnismäßig einfach gehalten und daher umständlich und schwer zu bedienen sind, kommt es häufig zu falschen Eingaben und zur falschen Auswahl des einzustellenden Aggregats. Ein solcher Fehler wird unter Umständen erst später beim (fehlerhaften) Betrieb der Bearbeitungsmaschine erkannt, wodurch bereits Schäden oder unbrauchbare Werkstücke erzeugt worden sein können.

Der Stand der Technik hat also den Nachteil, dass die individuelle Einstellung von einzelnen Aggregaten einer Bearbeitungsmaschine aufwendig und fehlerbehaftet ist.

Aus DE 10 2008 035 305 A1 ist ein Werkzeugträger bekannt, der an einem Spannfutter einer Werkzeugmaschine zum Tragen eines Werkzeugs anbringbar ist und Identifizierungsmittel, beispielsweise eine Punktmatrix oder einen Strichcode, zum Identifizieren des Werkzeugs aufweist. Die Identifizierungsmittel weisen dabei optische Identifizierungsmittel auf, die dazu geeignet sind, auf optischem Wege detektiert zu werden. Hierzu ist ein beispielsweise eine Kamera oder ein Strichcodeleser genannt. Ziel des dort beschriebenen Werkzeugträgers ist es, ein Identifizieren der jeweiligen Werkzeuge auch dann zuzulassen, wenn sie an einem Spannfutter einer Werkzeugmaschine angeordnet sind.

DE 10 2007 028 174 A1 offenbart eine Messanordnung zum optischen Vermessen von Schneidelementen bei Trennwerkzeugen, beispielsweise Sägeblättern, wobei eine Messeinheit mit mindestens zwei elektronischen Kameras und mit einem Durchlaufbereich für die zu vermessenden Schneidelemente des Trennwerkzeugs vorgesehen ist. Die Anordnung dient dazu, Trennwerkzeuge hinsichtlich ihrer wichtigsten Größen einfach, schnell und komfortabel sowie präzise zu vermessen.

### DARSTELLUNG DER ERFINDUNG

Die Aufgabe der vorliegenden Erfindung liegt darin, den Stand der Technik durch ein Verfahren zum Manipulieren einer Bearbeitungsmaschine zu bereichern, mit dem einzelne Aggregate der Bearbeitungsmaschine effizient und sicher individuell eingestellt und manipuliert werden können.

Diese Aufgabe wird durch ein Verfahren nach Anspruch 1 sowie eine Verwendung nach Anspruch 8, einen Computer nach Anspruch 9, ein Computerprogramm nach Anspruch 10 und eine Bearbeitungsmaschine nach Anspruch 11 gelöst. Bevorzugte Weiterbildungen der Erfindung ergeben sich aus den Unteransprüchen.

Bei einem erfindungsgemäßen Verfahren zum Manipulieren einer Bearbeitungsmaschine, insbesondere zum Bearbeiten von Werkstücken, die bevorzugt zumindest abschnittsweise aus Holz, Holzwerkstoffen, Kunststoff und dergleichen bestehen, wird eine mit einer Erfassungseinrichtung, insbesondere mit einer Kamera, versehene Bedieneinheit verwendet. In einem ersten Schritt des erfindungsgemäßen Verfahrens wird ein zu manipulierendes Teilelement der Werkzeugmaschine, insbesondere die äußere Gestalt des Teilelements, optisch erfasst und mit einem Referenzsignal verglichen ("Mustererkennung"), um das zu manipulierende Teilelement zu identifizieren, wobei in einem zweiten Schritt eine Ansteuerung dieses identifizierten Teilelements durch die Bedieneinheit erfolgt.

Der Begriff "manipulieren" bezeichnet im vorliegenden Text insbesondere ein Einstellen, aber auch ein Verfahren, Rotieren, Schwenken, Aktivieren, Deaktivieren oder Verstellen. Neben einer Kamera ist unter der "Erfassungseinrichtung" beispielsweise auch ein Strichcodeleser, ein Scanner oder dergleichen zu verstehen. Die "Bedieneinheit" muss erfindungsgemäß nicht mit der Bearbeitungsmaschine mechanisch verbunden sein, sondern es ist bevorzugt, dass es sich bei der Bedieneinheit um eine tragbare Vorrichtung handelt, die beispielsweise durch eine Funkverbindung mit der Bearbeitungsmaschine bzw. deren Steuerung verbunden werden kann. Die Bearbeitungsmaschine ist dann "mit der Bedieneinheit versehen", wenn die Bedieneinheit mit der Bearbeitungsmaschine eine Datenverbindung aufgenommen hat, die es der Bedieneinheit ermöglicht, Teilelemente oder Aggregate der Bearbeitungsmaschine zu manipulieren.

In dem ersten Schritt wird ein zu manipulierendes Teilelement oder Aggregat der Werkzeugmaschine optisch erfasst. Beispielsweise erfasst eine Kamera, wenn sie auf das Teilelement gerichtet ist, die Identität oder Art des Teilelements und auf diese Weise kann bestimmt werden, welches Teilelement manipuliert werden soll. Alternativ und zusätzlich ist es denkbar, dass beispielsweise ein Strichcodeleser einen auf dem Teilelement oder Aggregat angebrachten Strichcode erkennt und das Teilelement auf diese Weise identifiziert wird. Hierbei wird das optisch erfasste Teilelement mit einem Referenzelement verglichen, beispielsweise also mit einem in einer Datenbank hinterlegten Erscheinungsbild eines Teilelements der Bearbeitungsmaschine, um das zu manipulierende Teilelement zu identifizieren.

Mit anderen Worten werden die typischen Merkmale des Maschinenaussehens verglichen, um das zu manipulierende Teilelement zu erkennen.

Dass die "Bedieneinheit" das Teilelement "identifiziert" und "ansteuert" kann einerseits bedeuten, dass die Bedieneinheit einen Prozessor aufweist und mit einer Software betrieben wird, die diese Verfahrensschritte ermöglichen. Alternativ und zusätzlich ist es möglich, dass die Bedieneinheit in einem Computernetzwerk nur als Interface, d.h. als Schnittstelle mit dem Benutzer und/oder der Bearbeitungsmaschine dient, während die tatsächliche Identifizierung und Ansteuerung auf einem Servercomputer durchgeführt werden.

Mit Vorteil umfasst die Bedieneinheit eine Anzeige, bevorzugt eine Berührungsanzeige, durch die einem Benutzer das identifizierte Teilelement angezeigt wird. Auf diese Weise ist es möglich, dass der Benutzer die Identifizierung eines zu manipulierenden Teilelementes verfolgen und bestätigen kann.

Mit Vorteil zeigt die Bedieneinheit durch sie manipulierbare Parameter, bevorzugt alle durch sie manipulierbaren Parameter des identifizierten Teilelements auf der Anzeige an. Damit ist es dem Benutzer möglich, schnell einen Überblick über die an dem identifizierten und ausgewählten Teilelement einstellbaren Parameter zu erhalten. Beispielsweise kann dem Benutzer bei einem Oberflächenbearbeitungsaggregat unmittelbar angezeigt werden, dass hier die Höhe der Oberfläche über einer Fördervorrichtung oder die Dicke des zu bearbeitenden Werkstücks eingestellt werden können. So ist es dem Benutzer möglich, sehr einfach und ohne große Fehlergefahr die einzelnen Aggregate oder Teilelemente der Bearbeitungsmaschine zu manipulieren.

In einer bevorzugten Ausführungsform blendet die Bedieneinheit durch sie nicht manipulierbare Parameter, bevorzugt alle durch sie nicht manipulierbare Parameter, des identifizierten Teilelements aus. Im Beispiel des zuvor genannten Oberflächenbearbeitungsaggregats würden also nur diejenigen Parameter angezeigt werden, die bei diesem Aggregat auch manipuliert werden können, nicht jedoch Parameter, die beispielsweise bei einem anderen Aggregat oder in einer anderen Ausführung des Aggregats eingestellt werden können, oder Parameter, die wegen eines Defekts nicht eingestellt werden können. Hierbei ist unter einem "Parameter" ein durch den Benutzer manipulierbarer Wert zu verstehen.

Es ist möglich, dass nicht-manipulierbare Werte für ein Teilelement dennoch angezeigt werden, um die Manipulation des Teilelements, das heißt die Einstellung von Parametern, zu erleichtern. Dies gilt insbesondere für den Fall, in dem die Wahl bestimmter Parameter von anderen Werten, die in der Bearbeitungsmaschine eingestellt sind, abhängt. Beispielsweise ist es bei einer aus hintereinander angeordneten Aggregaten bestehenden Kette unter Umständen vorteilhaft, beim Einstellen eines bestimmten Aggregats auch die Einstellungen des vorhergehenden und des nachfolgenden Aggregats zu kennen. Dieses Anzeigen von "Werten" ist nicht als Anzeigen von "Parametern" zu verstehen.

Bevorzugt wird das angezeigte identifizierte Teilelement durch einen Benutzer als korrekt identifiziert bestätigt. Es wird bevorzugt, dass die Bedieneinheit auf ihrer Anzeige das identifizierte Teilelement anzeigt und der Benutzer in einer Abfrageschleife bestätigen muss, dass das Teilelement korrekt identifiziert wurde, bevor die Manipulation weiter durchgeführt wird.

Mit Vorteil wird die Bedieneinheit mit einem Computernetzwerk, bevorzugt einem Intranet und/oder dem Internet, vorzugsweise über eine WLAN Verbindung, verbunden, um aktualisierte Software auf die Bedieneinheit zu übertragen. Auf diese Weise ist es möglich, die Bedienung der Bearbeitungsmaschine laufend zu aktualisieren, ohne die eigentliche Maschinensteuerung der Bearbeitungsmaschine aktualisieren zu müssen. Dies hat zudem den Vorteil, dass die Maschinensteuerung selbst nicht an das Computernetzwerk angeschlossen sein muss, was die Anfälligkeit der Bearbeitungsmaschine gegenüber bösartigen Programmen oder unberechtigten Eingriffen von außen sicherer macht.

Bevorzugt umfasst die Erfassungseinrichtung, insbesondere die Kamera, wahlweise eine äußere Gestalt des zu manipulierenden Teilelements oder einen Strichcode auf dem zu manipulierenden Teilelement, um das zu manipulierende Teilelement zu identifizieren. Auf diese Weise ist es möglich, nach Wahl des Benutzers entweder eine optische Erfassung der äußeren Gestalt des Teilelements vorzunehmen, die auf eine für den Benutzer besonders intuitive Weise erfolgen kann, oder, sofern diese Erfassungsvariante fehlschlägt, als alternative Erfassungsform einen beispielsweise auf dem zu identifizierenden Teilelement aufgedruckten oder aufgeklebten Strichcode zu erkennen. Es können auch beide Verfahren angewendet werden, um die Identifizierung nach den einzelnen Verfahren zu bestätigen. Außerdem kann der Benutzer auf diese Weise wählen, welche Form der Erfassung des zu manipulierenden Teilelements für ihn am bequemsten oder sichersten ist.

Die Aufgabe der Erfindung wird unter anderem durch die Verwendung eines tragbaren Computers, insbesondere eines Laptop-Computers, Tablet-Computers oder Smartphones, mit einer Erfassungseinrichtung, insbesondere einer Kamera, und einer Anzeige als Bedieneinheit des zuvor beschriebenen Verfahrens gelöst. Ein solcher herkömmlich zu erwerbender tragbarer Computer, beispielsweise ein Tablet-Computer wie beispielsweise das iPad oder Galaxy oder ein Smartphone wie beispielsweise das iPhone, hat den großen Vorteil, dass hierfür seitens des Herstellers der Bearbeitungsmaschine keine aufwendigen Entwicklungskosten anfallen. Stattdessen kann auf Artikel zurückgegriffen werden, die bereits kommerziell in großem Maßstab eingesetzt und deshalb verhältnismäßig preiswert sind. Beispielsweise kann eine Applikation (App) für einen solchen tragbaren Computer entwickelt werden, welche das zuvor beschriebene Verfahren auf dem Computer ausführen lässt. Die Entwicklungskosten für eine solche Applikation liegen erheblich unter denen für eine speziell für eine bestimmte Bearbeitungsmaschine entwickelte Bedieneinheit samt der dazugehörigen Software.

Die Aufgabe der vorliegenden Erfindung wird auch durch einen Computer, insbesondere einen Laptop-Computer, Tablet-Computer oder ein Smartphone, mit einer Erfassungseinrichtung, insbesondere einer Kamera, und einer Anzeige gelöst, der zur Verwendung als Bedieneinheit des oben beschriebenen Verfahrens ausgestaltet ist. Mit anderen Worten löst ein Computer die Aufgabe der vorliegenden Erfindung dann, wenn auf ihm ein entsprechendes Computerprogramm installiert ist, das unter anderem die Durchführung des erfindungsgemäßen Verfahrens ermöglicht.

Schließlich wird die Aufgabe der vorliegenden Erfindung auch durch eine Bearbeitungsmaschine, insbesondere zum Bearbeiten von Werkstücken, die bevorzugt zumindest abschnittsweise aus Holz, Holzwerkstoffen, Kunststoff oder dergleichen bestehen, gelöst. Die erfindungsgemäße Bearbeitungsmaschine umfasst eine Maschinensteuerung zum Steuern eines oder mehrerer Teilelemente der Bearbeitungsmaschine und eine Bedieneinheit. Dabei weist die Bedieneinheit eine Erfassungseinrichtung, insbesondere eine Kamera, auf und die Bearbeitungsmaschine ist bevorzugt durch das erfindungsgemäße Verfahren manipulierbar.

Bei der erfindungsgemäßen Bearbeitungsmaschine dient die Maschinensteuerung dazu, ein oder mehrere Aggregate der Bearbeitungsmaschine zu steuern. Das bedeutet, dass die von der Bedieneinheit abgegebenen Bedienungsvorgaben durch die Maschinensteuerung in Steuersignale für das eine oder die mehreren Teilelemente (Aggregate) übersetzt und beispielsweise die in dem jeweiligen Teilelement befindlichen Motoren den Bedienanweisungen entsprechend steuert. Demgegenüber handelt es sich bei der Bedieneinheit, wie bereits oben angedeutet, um eine Einheit, die nicht zur direkten Steuerung der einzelnen Motoren und dergleichen eines oder mehrerer Teilelemente oder Aggregate geeignet ist, sondern nur Bedienanweisungen des Benutzers an die Maschinensteuerung weitergibt. Die Bedieneinheit stellt somit die Schnittstelle zwischen dem Benutzer und der eigentlichen Maschinensteuerung dar.

Ein Vorteil der Erfindung liegt darin, dass nicht für verschiedene Maschinenversionen extra gestaltete Bedienelemente entwickelt werden müssen, was die Gesamtkosten für eine solche Bearbeitungsmaschine senkt. Dies gilt ebenso für mögliche Ersatzteile. Bei der Verwendung von herkömmlichen tragbaren Computern, insbesondere Tablet-Computern, werden bereits sehr viele technische Anforderungen, beispielsweise an Funksystem, Energiemanagement, Gewicht usw. erfüllt. Auf diese Weise können erhebliche Entwicklungskosten bei der Bearbeitungsmaschine eingespart werden.

Darüber hinaus können sich weitere Einsparungen, beispielsweise von Zusatzgeräten wie einer eigenen Tastatur, Maus, einem Touchscreen oder ähnlichem an der Hauptstation der Bearbeitungsmaschine, von wo aus die Bearbeitungsmaschine gesteuert wird, ergeben. Es ist beispielsweise möglich, die Bedieneinheit als Hauptstation für die Bearbeitungsmaschine zu verwenden, beispielsweise durch eine eigene Applikation. In dieser Konfiguration kann die Bedieneinheit aus einem Einrichtmodus zum Manipulieren der Bearbeitungsmaschine in einen Eingabemodus zum Betreiben der Bearbeitungsmaschine wechseln. Bevorzugt kann hierfür eine Dockingstation vorgesehen sein, in die die Bedieneinheit eingesteckt werden kann.

Im Einrichtbetrieb kann die Bedieneinheit entlang der Bearbeitungsmaschine mitgenommen und zu dem Aggregat oder Teilelement transportiert werden, das eingerichtet (manipuliert) werden soll. An dieser Stelle kann der als Bedieneinheit fungierende tragbare Computer dann das Verfahren zur Identifizierung und Manipulation des entsprechenden Aggregats oder Teilelements vornehmen.

Grundsätzlich bietet das erfindungsgemäße Verfahren also die Möglichkeit, einen herkömmlichen tragbaren Computer mit Erfassungseinrichtung und Anzeige als Bedieneinheit für eine Bearbeitungsmaschine einzusetzen, was unter anderem die zuvor beschriebenen Vorteile hat.

Weitere Vorteile und Merkmale der Erfindung ergeben sich aus der nachfolgenden Figurenbeschreibung und der Gesamtheit der Patentansprüche.

### KURZE FIGURENBESCHREIBUNG

Fig. 1 zeigt ein schematisches Diagramm einer bevorzugten Bearbeitungsmaschine.
Fig. 2 zeigt eine schematische Ansicht einer bevorzugten Bearbeitungsmaschine.

### WEGE ZUR AUSFÜHRUNG DER ERFINDUNG

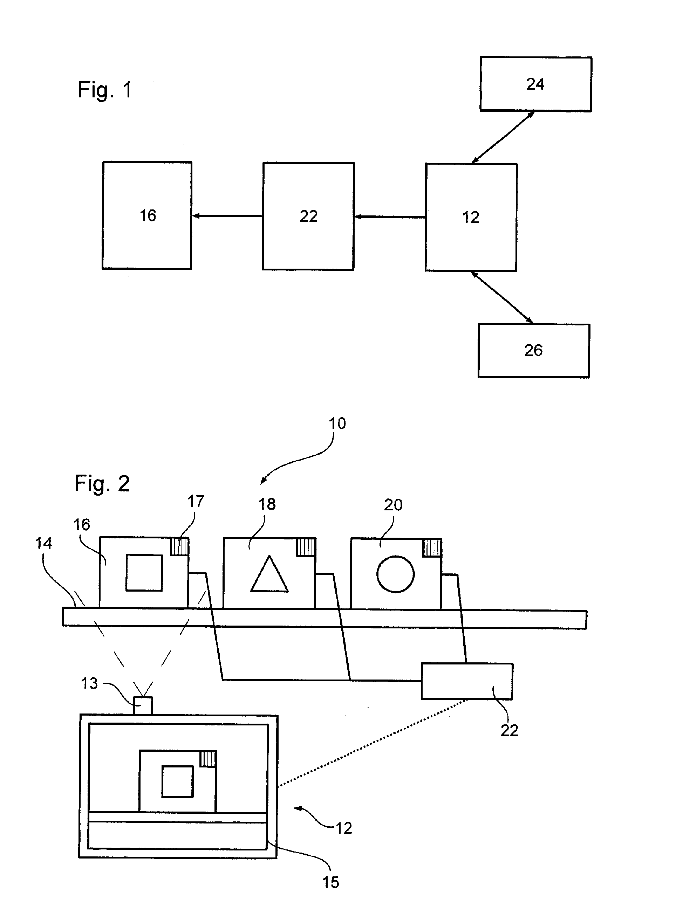

Fig. 1 zeigt eine schematische Diagrammdarstellung einer bevorzugten Bearbeitungsmaschine. Die Bearbeitungsmaschine umfasst ein zu manipulierendes Teilelement 16, das auch als Aggregat bezeichnet werden kann. Dieses Teilelement 16 ist mit einer Maschinensteuerung 22 verbunden. Die Maschinensteuerung 22 dient dazu, das Teilelement 16 der Bearbeitungsmaschine in Übereinstimmung mit bestimmten Vorgaben seitens des Bedieners zu steuern.

Die Maschinensteuerung 22 ist wiederum mit einer Bedieneinheit 12 verbunden, über die Eingaben des Benutzers an die Maschinensteuerung 22 weitergegeben werden, um das Teilelement 16 der Bearbeitungsmaschine zu manipulieren. Ein Benutzer gibt also in die Bedieneinheit 12 Anweisungen für die Bearbeitungsmaschine ein, die von der Bedieneinheit 12 an die Maschinensteuerung 22 weitergeleitet werden. Von der Maschinensteuerung 22 werden diese Anweisungen in Steuerungsbefehle für die einzelnen Elemente der Bearbeitungsmaschine, beispielsweise das Teilelement 16, übersetzt und umgesetzt.

Die Bedieneinheit 12 kann dabei beispielsweise durch ein Funknetz wie WLAN oder GSM mit der Maschinensteuerung 22 verbunden sein. Daneben ist es auch möglich, dass die Bedieneinheit 12 mit einem Intranet 24 oder dem Internet 26 verbunden ist, beispielsweise um aktualisierte Softwareversionen abzurufen und dadurch stets aktualisiert zu sein. Grundsätzlich ist es auf diese Weise auch möglich, dass die Bedieneinheit 12 aus dem Internet 26 oder dem Intranet 24 bedient wird.

Fig. 2 zeigt eine schematische Ansicht einer Bearbeitungsmaschine 10 mit einer Fördervorrichtung 14 und drei Teilelementen 16, 18 und 20.

Jedes der Teilelemente 16, 18 und 20 der Bearbeitungsmaschine 10 ist mit einer Maschinensteuerung 22 verbunden, die die Teilelemente 16, 18 und 20 steuert. Die Maschinensteuerung 22 ist wiederum mit einer Bedieneinheit 12 verbunden, die durch einen Benutzer eingegebene Bedienvorgaben an die Maschinensteuerung 22 abgibt. Bei der Bedieneinheit 12 handelt es sich in der in Fig. 2 dargestellten Ausführungsform um einen Tablet-Computer, beispielsweise um ein iPad.

Die Bedieneinheit 12 weist eine Kamera 13 auf. Mit der Kamera 13 ist es der Bedieneinheit 12 möglich, ein Teilelement der Bearbeitungsmaschine 10 zu identifizieren. In der in Fig. 2 gezeigten Situation erfasst die Kamera 13 das Teilelement 16. Das Teilelement 16 ist auf einer Anzeige 15 der Bedieneinheit 12 angezeigt. Durch Vergleich mit einer in einer Datenbank hinterlegten Referenzgestalt des Teilelements 16 wird das Teilelement 16, das von der Kamera 13 erfasst wurde, identifiziert, und es kann in einem zweiten Schritt über die Bedieneinheit 12 und die Maschinensteuerung 22 eine Ansteuerung des Teilelements 16 erfolgen. Alternativ kann die Kamera 13 auch einen Strichcode 17 erfassen, der auf dem Teilelement 16 angebracht ist.

Für einen Benutzer ist es auf diese Weise äußerst bequem, einzelne Teilelemente der Bearbeitungsmaschine zu manipulieren. Der Benutzer muss nur die Kamera 13 auf das Teilelement richten, das er manipulieren oder einstellen will. Dadurch wird das Teilelement von der Bedieneinheit 12 erfasst und kann beispielsweise mittels eines Computerprogramms mit einem Referenzelement verglichen werden, das beispielsweise in einer Datenbank gespeichert ist. Auf diese Weise erfolgt eine automatische und fehlerunempfindliche Identifikation desjenigen Teilelements der Bearbeitungsmaschine, das der Benutzer manipulieren will.

Jede manipulierende Eingabe des Benutzers über die Bedieneinheit 12 kann somit dem richtigen Teilelement, in Fig. 2 also dem Teilelement 16, zugeordnet werden und die Gefahr von fehlerhaften Manipulationen ist praktisch ausgeschlossen. In einer besonders bevorzugten Ausführungsform lässt die Bedieneinheit 12 vor dem Annehmen von Manipulationseingaben des Benutzers eine Bestätigung der Identifizierung des zu manipulierenden Teilelements vom Benutzer vornehmen.

Durch die vorliegende Erfindung ist es für einen Benutzer möglich, eine Bearbeitungsmaschine besonders leicht und sicher zu manipulieren. Gleichzeitig werden erhebliche Einsparungen bei der Entwicklung der Bearbeitungsmaschine erzielt.

## Patentansprüche

1. Verfahren zum Manipulieren einer Bearbeitungsmaschine (10) zum Bearbeiten von Werkstücken, die bevorzugt zumindest abschnittsweise aus Holz, Holzwerkstoffen, Kunststoff oder dergleichen bestehen,
bei dem eine mit einer Erfassungseinrichtung (13) versehene Bedieneinheit (12) verwendet wird,
mit der in einem ersten Schritt ein zu manipulierendes Teilelement (16, 18, 20) der Bearbeitungsmaschine (10) optisch erfasst und mit einem Referenzelement verglichen wird, um das zu manipulierende Teilelement (16, 18, 20) zu identifizieren,
wobei in einem zweiten Schritt eine Ansteuerung dieses identifizierten Teilelements (16, 18, 20) durch die Bedieneinheit (12) erfolgt.

2. Verfahren nach Anspruch 1,
wobei die Bedieneinheit (12) eine Anzeige (15), bevorzugt eine Berührungsanzeige, umfasst, durch die einem Benutzer das identifizierte Teilelement (16, 18, 20) angezeigt wird.

3. Verfahren nach Anspruch 2,
wobei die Bedieneinheit (12) durch sie manipulierbare Parameter, bevorzugt alle durch sie manipulierbaren Parameter, des identifizierten Teilelements (16, 18, 20) auf der Anzeige (15) anzeigt.

4. Verfahren nach Anspruch 3,
wobei die Bedieneinheit (12) durch sie nicht manipulierbare Parameter, bevorzugt alle durch sie nicht manipulierbaren Parameter, des identifizierten Teilelements (16, 18, 20) ausblendet.

5. Verfahren nach einem der Ansprüche 2 bis 4,
wobei das angezeigte identifizierte Teilelement (16, 18, 20) als korrekt identifiziert durch einen Benutzer bestätigt wird.

6. Verfahren nach einem der vorhergehenden Ansprüche,
wobei die Bedieneinheit (12) mit einem Computernetzwerk, bevorzugt einem Intranet (24) und/oder dem Internet (26), vorzugsweise über eine WLAN Verbindung, verbunden wird, um aktualisierte Software auf die Bedieneinheit (12) zu übertragen.

7. Verfahren nach einem der vorhergehenden Ansprüche,
wobei die Erfassungseinrichtung (13) wahlweise eine äußere Gestalt des zu manipulierenden Teilelements (16, 18, 20) oder einen Strichcode (17) auf dem zu manipulierenden Teilelement (16, 18, 20) erfasst, um das zu manipulierende Teilelement (16, 18, 20) zu identifizieren.

8. Verwendung eines tragbaren Computers (12), insbesondere eines Laptop-Computers, Tablet-Computers oder Smartphones, mit einer Erfassungseinrichtung (13), insbesondere einer Kamera, und einer Anzeige (15) als Bedieneinheit des Verfahrens nach einem der vorhergehenden Ansprüche.

9. Computer (12) mit einer Erfassungseinrichtung (13) und einer Anzeige, der zur Verwendung als Bedieneinheit des Verfahrens nach einem der Ansprüche 1 bis 7 ausgestaltet ist, indem er ein Computerprogramm aufweist, das, wenn es auf dem Computer ausgeführt wird, diesen zur Verwendung als Bedieneinheit für ein Verfahren nach einem der Ansprüche 1 bis 7 ausgestaltet.

10. Computerprogramm, das, wenn es auf einem Computer (12) mit einer Erfassungseinrichtung (13) und einer Anzeige (15) ausgeführt wird, diesen zur Verwendung als Bedieneinheit für ein Verfahren nach einem der Ansprüche 1 bis 7 ausgestaltet.

11. Bearbeitungsmaschine (10), zum Bearbeiten von Werkstücken, die bevorzugt zumindest abschnittsweise aus Holz, Holzwerkstoffen, Kunststoff oder dergleichen bestehen,
umfassend eine Maschinensteuerung (22) zum Steuern eines oder mehrerer Teilelemente (16, 18, 20) der Bearbeitungsmaschine (10) und eine Bedieneinheit (12),
**dadurch gekennzeichnet, dass** die Bedieneinheit (12) eine Erfassungseinrichtung (13) und ein Computerprogramm nach Anspruch 10 aufweist und
dass die Bearbeitungsmaschine (10) durch ein Verfahren nach einem der Ansprüche 1 bis 7 manipulierbar ist.

12. Bearbeitungsmaschine (10) nach Anspruch 11, wobei die Bedieneinheit (12) ferner eine Anzeige (15) aufweist.

13. Bearbeitungsmaschine (10) nach Anspruch 11 oder 12, wobei die Bedieneinheit (12) mit einem Computernetzwerk (24, 26), bevorzugt einem Intranet und/oder dem Internet, vorzugsweise über eine WLAN Verbindung, verbindbar ist, so dass aktualisierte Software auf die Bedieneinheit (12) übertragbar ist.

14. Bearbeitungsmaschine (10) nach einem der Ansprüche 11 bis 13, wobei die Bedieneinheit (12) ein tragbarer Computer, insbesondere ein Laptop-Computer, Tablet-Computer oder Smartphone, mit einer Erfassungseinrichtung (13), insbesondere einer Kamera, ist.

## Claims

1. Method for manipulating a processing machine (10) for processing workpieces which preferably consist at least in some sections of wood, derived timber products, plastic or the like, in which an operating unit (12) provided with a recording device (13) is used, with which in a first step, a sub-element (16, 18, 20) of the processing machine (10) to be manipulated is optically recorded and compared with a reference element to identify the sub-element (16, 18, 20) to be manipulated, wherein in a second step, activation of this identified sub-element (16, 18, 20) is effected by the operating unit (12).

2. Method according to claim 1, wherein the operating unit (12) comprises a display (15), preferably a touch display, by means of which the identified sub-element (16, 18, 20) is displayed to a user.

3. Method according to claim 2, wherein the operating unit (12) displays on the display (15) parameters which can be manipulated by it, preferably all parameters which can be manipulated by it, of the identified sub-element (16, 18, 20).

4. Method according to claim 3, wherein the operating unit (12) cuts out parameters which cannot be manipulated by it, preferably all parameters which cannot be manipulated by it, of the identified sub-element (16, 18, 20).

5. Method according to one of claims 2 to 4, wherein the displayed identified sub-element (16, 18, 20) is confirmed as correctly identified by a user.

6. Method according to one of the preceding claims, wherein the operating unit (12) is connected to a computer network, preferably an Intranet (24) and/or the Internet (26), preferably via a WLAN connection, to transmit updated software to the operating unit (12).

7. Method according to one of the preceding claims, wherein the recording device (13) if required records an outer shape of the sub-element (16, 18, 20) to be manipulated or a barcode (17) on the sub-element (16, 18, 20) to be manipulated to identify the sub-element (16, 18, 20) to be manipulated.

8. Use of a portable computer (12), in particular a laptop computer, tablet computer or smart phone, with a recording device (13), in particular a camera, and a display (15) as an operating unit of the method according to one of the preceding claims.

9. Computer (12) with a recording device (13) and a display which is organised for use as an operating unit of the method according to one of claims 1 to 7, in that it has a computer program which, if it is executed on the computer, organises the latter for use as an operating unit for a method according to one of claims 1 to 7.

10. Computer program which, if it is executed on a computer (12) with a recording device (13) and a display (15), organises the latter for use as an operating unit for a method according to one of claims 1 to 7.

11. Processing machine (10) for processing workpieces which preferably consist at least in some sections of wood, derived timber products, plastic or the like, comprising a machine control (22) for controlling one or more sub-elements (16, 18, 20) of the processing machine (10) and an operating unit (12), **characterised in that** the operating unit (12) has a recording device (13) and a computer program according to claim 10 and **in that** the processing machine (10) can be manipulated by a method according to one of claims 1 to 7.

12. Processing machine (10) according to claim 11, wherein the operating unit (12) also has a display (15).

13. Processing machine (10) according to claim 11 or 12, wherein the operating unit (12) can be connected to a computer network (24, 26), preferably an Intranet and/or the Internet, preferably via a WLAN connection, so that updated software can be transmitted to the operating unit (12).

14. Processing machine (10) according to one of claims 11 to 13, wherein the operating unit (12) is a portable computer, in particular a laptop computer, tablet computer or smart phone, with a recording device (13), in particular a camera.

## Revendications

1. Procédé de manipulation d'une machine-outil (10) pour l'usinage de pièces préférentiellement constituées au moins en partie de bois, de matériaux ligneux, de matières synthétiques ou similaires,
où est utilisée une unité de commande (12) pourvue d'un dispositif de détection (13),
au moyen duquel, lors d'une première étape, un élément fragmentaire (16, 18, 20) de la machine-outil (10) à manipuler est optiquement détecté et comparé à un élément de référence, pour identifier l'élément fragmentaire (16, 18, 20) à manipuler,
une commande dudit élément fragmentaire (16, 18, 20) identifié étant exécutée par l'unité de commande (12) lors d'une deuxième étape.

2. Procédé selon la revendication 1,
où l'unité de commande (12) présente un écran (15), préférentiellement un écran tactile, au moyen duquel l'élément fragmentaire (16, 18, 20) identifié est affiché pour un utilisateur.

3. Procédé selon la revendication 2,
où l'unité de commande (12) affiche sur l'écran (15) des paramètres qu'elle permet de manipuler, préférentiellement tous les paramètres qu'elle permet de manipuler de l'élément fragmentaire (16, 18, 20) identifié.

4. Procédé selon la revendication 3,
où l'unité de commande (12) masque des paramètres qu'elle ne permet pas de manipuler, préférentiellement tous les
paramètres qu'elle ne permet pas de manipuler de l'élément fragmentaire (16, 18, 20) identifié.

5. Procédé selon l'une des revendications 2 à 4,
où l'élément fragmentaire (16, 18, 20) identifié affiché est confirmé comme correctement identifié par un utilisateur.

6. Procédé selon l'une des revendications précédentes, où l'unité de commande (12) est connectée à un réseau d'ordinateurs, préférentiellement à un Intranet (24) et/ou à Internet (26), préférentiellement au moyen d'une liaison WLAN, pour communiquer des logiciels mis à jour à l'unité de commande (12).

7. Procédé selon l'une des revendications précédentes, où le dispositif de détection (13) détecte en option une forme extérieure de l'élément fragmentaire (16, 18, 20) à manipuler ou un code-barres (17) sur l'élément fragmentaire (16, 18, 20) à manipuler, pour identifier l'élément fragmentaire (16, 18, 20) à manipuler.

8. Utilisation d'un ordinateur portatif (12), en particulier d'un ordinateur portable, d'une tablette ou d'un smartphone, avec un dispositif de détection (13), en particulier une caméra, et un écran (15) en tant qu'unité de commande du procédé selon l'une des revendications précédentes.

9. Ordinateur (12) avec un dispositif de détection (13) et un écran prévu pour être utilisé comme unité de commande du procédé selon l'une des revendications 1 à 7, un programme informatique étant présenté par l'ordinateur, lequel, une fois exécuté sur l'ordinateur, configure celui-ci pour une utilisation comme unité de commande pour un procédé selon l'une des revendications 1 à 7.

10. Programme informatique qui, une fois exécuté sur un ordinateur (12) avec un dispositif de détection (13) et un écran (15), configure celui-ci pour une utilisation comme unité de commande pour un procédé selon l'une des revendications 1 à 7.

11. Machine-outil (10) pour l'usinage de pièces préférentiellement constituées au moins en partie de bois, de matériaux ligneux, de matières synthétiques ou similaires,
comprenant une commande de machine (22) pour la commande d'un ou de plusieurs éléments fragmentaires (16, 18, 20) de la machine-outil (10), et une unité de commande (12),
**caractérisée en ce que** l'unité de commande (12) est pourvue d'un dispositif de détection (13) et d'un programme informatique selon la revendication 10, et
**en ce que** la machine-outil (10) est préférentiellement manipulable au moyen d'un procédé selon l'une des revendications 1 à 7.

12. Machine-outil (10) selon la revendication 11, où l'unité de commande (12) comporte en outre un écran (15).

13. Machine-outil (10) selon la revendication 11 ou 12, où l'unité de commande (12) peut être connectée à un réseau d'ordinateurs (24, 26), préférentiellement à un Intranet et/ou à Internet, préférentiellement au moyen d'une liaison WLAN, de manière à permettre la communication d'un logiciel mis à jour à l'unité de commande (12).

14. Machine-outil (10) selon l'une des revendications 11 à 13, où l'unité de commande (12) est un ordinateur portatif, en particulier un ordinateur portable, une tablette ou un smartphone, avec un dispositif de détection (13), en particulier une caméra.
